Europäisches Patentamt

European Patent Office

Office européen des brevets

(11) Veröffentlichungsnummer: **0 300 196**
**A1**

## EUROPÄISCHE PATENTANMELDUNG

(21) Anmeldenummer: 88109554.1

(51) Int. Cl.⁴: **G01L 3/04**

(22) Anmeldetag: 15.06.88

(30) Priorität: 22.07.87 DE 3724288

(43) Veröffentlichungstag der Anmeldung:
25.01.89 Patentblatt 89/04

(84) Benannte Vertragsstaaten:
CH DE FR GB IT LI

(71) Anmelder: **Siemens Aktiengesellschaft Berlin
und München**
**Wittelsbacherplatz 2**
**D-8000 München 2(DE)**

(72) Erfinder: **Doemens, Günter, Dr.-Ing.**
**Eichenfeldstrasse 4**
**D-8150 Holzkirchen(DE)**

(54) Messaufnehmer für Längen- oder Abstandsänderungen, insbesondere für berührungslose Messung von Drehmomenten an rotierenden Wellen.

(57) Bei bekannten Meßaufnehmern wird die Längen- oder Abstandsänderung ( Δx) über ein mechanisches Hebelsystem verstärkt und dann in eine elektrische Größe umgewandelt. Bei dem neuen Meßaufnehmer wird zur Erhöhung der Genauigkeit die zu erfassende Längen- oder Abstandsänderung (Δ x) auf einen Verdränger (V) übertragen, wobei die verdrängte Flüssigkeit (F), insbesondere Quecksilber, in eine Kapillare (K) eingeleitet wird und die Länge der Flüssigkeitssäule in der Kapillare (K), vorzugsweise als Änderung eines Widerstandes (W) in eine elektrische Größe umgewandelt wird. Der neue Meßaufnehmer ist insbesondere für die Drehmomentenmessung geeignet.

FIG 3

EP 0 300 196 A1

## Meßaufnehmer für Längen-oder Abstandsänderungen, insbesondere für berührungslose Messung von Drehmomenten an rotierenden Wellen

Die Erfindung betrifft einen Meßaufnehmer für Längen- oder Abstandsänderungen, insbesondere für berührungslose Messung von Drehmomenten an rotierenden Wellen, bei welchem die zu erfassende Längen- oder Abstandsänderung verstärkt und in eine elektrische Größe umgewandelt wird.

Die berührungslose, präzise Messung des abgegebenen Drehmomentes und damit der mechanischen Leistung an rotierenden Wellen ist heute eines der vordringlichsten sensorischen Probleme in der Energie- und Automatisierungstechnik. Die Anwendungsfelder liegen in der Überwachung und Regelung von Antrieben sowie in der Wirkungsgradoptimierung von Energieumwandlungsanlagen.

Zur berührungslosen Messung von Drehmomenten bedienen sich die zur Zeit bekannten Verfahren entweder der Erfassung der durch das Moment an der Wellenoberfläche erzeugten mechanischen Spannung oder der Messung der Torsion.

Zur Umsetzung der mechanischen Spannung in eine elektrische Größe werden Dehnungsmeßstreifen auf der Welle angebracht und das Meßsignal über Trägerfrequenz von der rotierenden Welle abgenommen. Das Verfahren ist seit langem bekannt, ist aber in erster Linie für den Laborbereich zur Anwendung gekommen, da das Anbringen der Dehnungsmeßstreifen an der Welle aufwendig und die Meßübertragung sehr kostenintensiv ist. In jüngster Zeit sind auch Entwicklungen bekannt geworden, bei denen die Veränderung der Permeabilität an amorphen Metallschichten durch mechanische Spannungen zur Drehmomentmessung ausgenutzt werden. Hier bestehen jedoch noch Probleme im Hinblick auf das Aufbringen der amorphen Metallschichten auf die Welle.

Die Torsion einer Welle bei den üblichen Dimensionierungen hinsichtlich Wellendurchmesser und Drehmoment ist äußerst gering. Bei einer 70mm starken Welle eines Elektromotors beträgt beispielsweise die Torsion bei Nenndrehmoment in einem Meßabstand von 30mm nur wenige Mikrometer. Zur Verstärkung des Torsionsweges schließt man deshalb an den Wellenstumpf eine längere Meßwelle an und greift daran die Torsion berührungslos über induktive Systeme ab. Das Verfahren scheidet jedoch in der Praxis aus, da in der Regel kein Platz für die zusätzliche Meßwelle vorhanden ist. Um auf dem im allgemeinen kurzen Wellenstumpf das Drehmoment dennoch über Torsion meßbar zu machen, ist in der Zeitschrift "VDI-Nachrichten" Nr. 20, 15.Mai 1987 ein Verfahren vorgeschlagen worden, bei dem auf der Welle der Torsionsweg durch ein mechanisches Hebelsystem in eine axiale Bewegung übersetzt wird. Die dann im Zehntelmillimeterbereich liegende axiale Verschiebung wird über ein induktives System berührungslos abgenommen. Der axiale Meßabstand auf der Welle entspricht dabei etwa dem doppelten Wellendurchmesser. Eine derartige Erfassung von Drehmomenten erfordert jedoch eine relativ aufwendige Mechanik, wobei auch die erzielbare Genauigkeit von etwa 5% für viele Anwendungsfälle nicht ausreicht.

Der Erfindung liegt die Aufgabe zugrunde, einen Meßaufnehmer für die Messung von Drehmomenten zu schaffen, der sowohl im ruhenden als auch im rotierenden Zustand das über die Welle übertragene Moment und damit auch die mechanische Leistung mit einer Genauigkeit von ± 0,5% berührungslos erfassen kann und ein dem Drehmoment proportionales elektrisches Signal abgibt.

Diese Aufgabe wird bei einem gattungsgemäßen Meßaufnehmer durch folgende Merkmale gelöst:
-die zu erfassende Längen- oder Abstandsänderung ist auf einen Verdränger übertragbar,
-vom Verdränger verdrängte Flüssigkeit ist in eine Kapillare einleitbar,
-die elektrische Größe ist aus Längenänderungen der Flüssigkeitsäule in der Kapillare ableitbar.

Der Erfindung liegt die Erkenntnis zugrunde, daß eine hydraulische Verstärkung der zu erfassenden Längen- oder Abstandsänderungen einfach zu realisieren ist und auch eine wesentlich höhere Genauigkeit sowie einen deutlich höheren Verstärkungsfaktor erlaubt als die bekannte mechanische Verstärkung mit einem Hebelsystem. Bei der hydraulischen Verstärkung gehen die Flächenverhältnisse von Verdränger und Kapillare in den Verstärkungsgrad ein. Je nach Querschnittsverhältnis von Verdränger zur Kapillare sind Wegverstärkungen bis 1 : 5000 realisierbar. Damit ergibt sich bei Meßaufnehmern für die Messung von Drehmomenten ein äußerst geringer Platzbedarf in axialer Richtung. Neben der Messung von Drehmomenten kann das erfindungsgemäße hydraulisch/elektrische Prinzip auch allgemein bei der Messung von mechanischen Dehnungen bzw. Spannungen eingesetzt werden und hier in manchen Fällen die konventionellen Dehnungsmeßstreifen ersetzen. Als Anwendungsbeispiel kann hier der Überlastschutz in rauher Umgebung genannt werden.

Ist der Verdränger durch eine Membrane gebildet, so ergibt sich gegenüber der Verwendung von Kolben als Verdränger eine weitere Reduzierung des Platzbedarfs.

Eine besonders einfache Übertragungsanordnung wird dadurch erreicht, daß die zu erfassende Längen- oder Abstandsänderung durch ein quer dazu ausgerichtetes Übertragungsglied auf den Verdränger übertragbar ist.

Eine besonders bevorzugte Ausgestaltung der Erfindung ist gekennzeichnet durch eine elektrisch leitende Flüssigkeit. Hierdurch wird die Ableitung der elektrischen Größe aus Längenänderungen der Flüssigkeitsäule in der Kapillare erheblich erleichtert. Vorzugsweise wird dabei Quecksilber als elektrisch leitende Flüssigkeit verwendet. Quecksilber ermöglicht einen Einsatz des Meßaufnehmers innerhalb eines sehr großen Temperaturbereichs. Außerdem wird bei der Verwendung von Quecksilber eine im Hinblick auf eine möglichst hohe Genauigkeit unerwünschte Benetzung der Innenwandung der Kapillare ausgeschlossen.

Bei der Verwendung einer elektrisch leitenden Flüssigkeit können dann Längenänderungen der Flüssigkeitsäule in der Kapillare auf einfache Weise in Änderungen eines ohm'schen Widerstandes umgesetzt werden. Dies erfordert einen wesentlich geringeren baulichen Aufwand als eine induktive Erfassung von Längenänderungen der Flüssigkeitssäule in der Kapillare. Die Umsetzung der Längenänderungen in Änderungen eines ohm'schen Widerstandes können dann auf besonders einfache Weise dadurch verwirklicht werden, daß der Widerstand in Abhängigkeit von Längenänderungen der Flüssigkeitssäule in der Kapillare durch die Flüssigkeitssäule bereichsweise kurzschließbar ist.

Im Hinblick auf eine möglichst einfache Bauweise des Meßaufnehmers bei geringen Herstellungskosten hat es sich auch als vorteilhaft herausgestellt, wenn die Kapillare zumindest bereichsweise durch eine zwischen zwei aneinanderliegenen Platten verlaufende Rille gebildet ist und der Widerstand als metallische Dünnfilmschicht auf eine der Platten aufgebracht ist. Zur weiteren Vereinfachung der Fertigung kann dabei die Rille auf die Innenseite einer Platte eingebracht sein, während der Widerstand auf die Innenseite der anderen Platte aufgebracht ist. Möglichst große den Längen- oder Abstandsänderungen pro portionale Widerstandsänderungen können dabei dadurch realisiert werden, daß der Widerstand zumindest bereichsweise einen die Kapillare kreuzenden mäanderförmigen Verlauf aufweist.

Eine unerwünschte Ausdehnung des Flüssigkeitsvolumens in die Kapillare bei Temperaturerhöhung kann zum einen durch ein geringes Flüssigkeitsvolumen und zum anderen durch entsprechende Wahl des Ausdehnungskoeffizienten des umgebenden Kammermaterials vollständig kompensiert werden. Vorzugsweise wird jedoch zur Erhöhung der Genauigkeit sowie zur Kompensation von Temperatureffekten die zu erfassende Längen- oder Abstandsänderung auf zwei gegenläufig arbeitende Verdränger übertragen, denen jeweils eine Kapillare zugeordnet ist. Eine weitere Erhöhung der Genauigkeit kann dabei dadurch bewirkt werden, daß die aus Längenänderungen der Flüssigkeitsäulen in den Kapillaren ableitbaren elektrischen Größen mit einer Brückenschaltung in elektrische Spannungsänderungen umsetzbar sind.

Beim Einsatz der erfindungsgemäß ausgestalteten Meßaufnehmer für berührungslose Messung von Drehmomenten an rotierenden Wellen ist vorgesehen, daß als zu erfassende Längen- oder Abstandsänderung die in einem vorgebbaren axialen Meßabstand der Welle auftretende Torsion auf den Verdränger übertragbar ist. Ein besonders geringer Platzbedarf kann dabei dadurch erzielt werden, daß der axiale Meßabstand höchstens dem halben Durchmesser der Welle entspricht.

Gemäß einer weiteren bevorzugten Ausgestaltung der Erfindung sind zur Abnahme der Torsion zwei in Umfangsrichtung linienförmig auf der Welle aufliegende Klemmringe vorgesehen. Die Torsion zwischen den im axialen Meßabstand angeordneten linienförmigen Auflagen kann dann als Relativbewegung zwischen den beiden Klemmringen besonders einfach auf den Verdränger über tragen werden. Zweckmäßigerweise ist dabei das Übertragungsglied in axialer Richtung auf dem einen Klemmring befestigt, während der zugeordnete Verdränger mit Kapillare auf dem anderen Klemmring fest angeordnet ist. Ist die Kapillare dabei in axialer Richtung der Welle ausgerichtet, so können mögliche Einflüsse von Fliehkräften auf die Genauigkeit des Meßaufnehmers ausgeschlossen werden.

Die aus Längenänderungen der Flüssigkeitsäule in der Kapillare abgeleitete elektrische Größe kann von der rotierenden Welle induktiv berührungslos abgenommen werden. Zur weiteren Vereinfachung des baulichen Aufwands wird jedoch vorzugsweise eine kapazitive Übertragung der elektrischen Größe vorgenommen. Zu dieser kapazitiven Übertragung ist dann mindestens ein koaxial zur Welle angeordneter Zylinderkondensator vorgesehen, dessen eine Elektrode mit der Welle verbunden ist und dessen andere Elektrode in bezug auf die Welle ortsfest angeordnet ist.

Im folgenden wird ein Ausführungsbeispiel der Erfindung anhand der Zeichnung näher erläutert. Es zeigen

Fig. 1 die Erfassung der Torsion einer Welle als Maß für das übertragene Drehmoment,

Fig. 2 die Abnahme der Torsion durch zwei im Abstand zueinander auf der Welle angeordnete Klemmringe,

Fig. 3 einen Meßaufnehmer für die berührungslose Messung von Drehmomenten durch hydraulisch/elektrische Erfassung der Torsion,

Fig. 4 die Ausgestalung von Kapillare und Widerstand bei dem Meßaufnehmer gemäß Fig. 4,

Fig. 5 die Anordnung der Klemmringe und des Meßaufnehmers gemäß Fig. 4 auf der Welle und

Fig. 6 eine Brückenschaltung zur kapazitiven Übertragung der mit dem Meßaufnehmer gemäß Fig. 3 ermittelten elektrischen Größen.

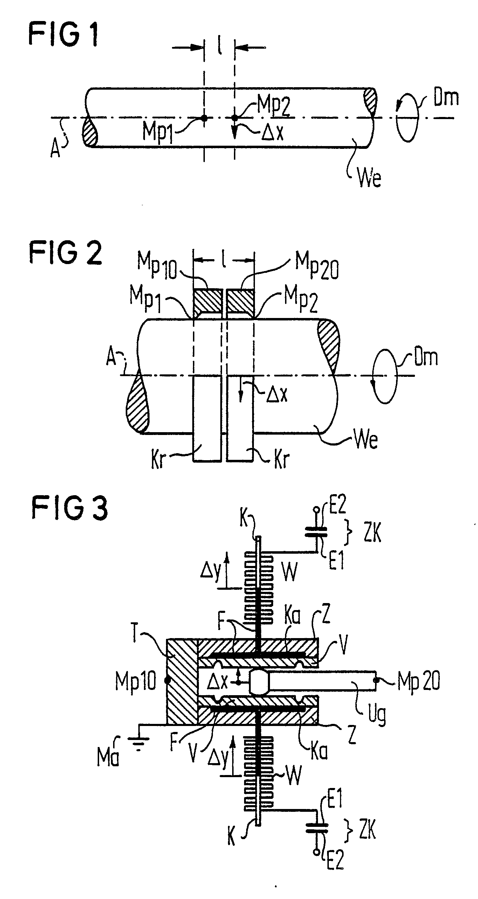

Figur 1 zeigt eine um die Achse A drehbare Welle We, auf deren Umfangsfläche zwei im axialen Meßabstand 1 liegende Meßpunkte Mp1 und Mp2 angeordnet sind. Wird nun durch die Welle We ein durch den Pfeil Dm angedeutetes Drehmoment übertragen, so bildet die zwischen den Meßpunkten Mp1 und Mp2 auftretende Torsion der Welle We ein Maß für das Drehmoment Dm. In Figur 1 ist diese dem Drehmoment Dm proportionale Torsion durch die zwischen den Meßpunkten Mp1 und Mp2 in Umfangsrichtung auftretende Längenänderung $\Delta x$ aufgezeigt.

Gemäß Figur 2 werden zur Abnahme der in Figur 1 aufgezeigten Torsion $\Delta x$ zwei mit Kr bezeichnete Klemmringe auf der Welle We derart befestigt, daß ihre in Umfangsrichtung linienförmigen Auflagen den axialen Meßabstand 1 aufweisen. Die Torsion $\Delta x$ zwischen den Meßpunkten Mp1 und Mp2 kann dann als zwischen den Klemmringen Kr auftretende Relativbewegung in Umfangsrichtung abgenommen werden. Bei Übertragung eines Drehmomentes Dm durch die Welle We verdrehen sich also die auf den Klemmringen Kr dargestellten Meßpunkte Mp10 und Mp20 um die Torsion $\Delta x$ gegeneinander.

Gemäß Figur 3 wird an dem Meßpunkt Mp10 ein queraxial ausgerichteter Träger T befestigt, während am Meßpunkt Mp20 ein axial ausgerichtetes Übertragungsglied Ug befestigt wird. Diese hier in Figur 3 lediglich angedeutete Befestigung auf den Klemmringen Kr (vergleiche Fig. 2) kann dabei durch Löten, Schweißen, Verschrauben und dgl. vorgenommen werden. Der Träger T trägt zwei in Umfangsrichtung im Abstand zueinander angeordnete und äußerst flach ausgebildete Zylinder Z, deren Kammern Ka jeweils durch mit V bezeichnete Membranen geschlossen sind. Die beiden Kammern Ka sind jeweils mit einer elektrisch leitenden Flüssigkeit F gefüllt, die bei einer Verringerung der Kammervolumina in Kapillaren K ausweichen kann. Im dargestellten Ausführungsbeispiel handelt es sich bei der Flüssigkeit F um Quecksilber. Wird nun über das knochenförmig ausgebildete frei Ende des Übertragungsgliedes Ug eine Torsion $\Delta x$ auf die beidseitig davon angeordneten und relativ steif ausgebildeten Membranen bzw. Verdränger V übertragen, so er geben sich in den zugeordneten Kapillaren K gegenläufige Längenänderungen $\Delta y$, die der Torsion $\Delta x$ und damit dem Drehmoment Dm (vergleiche Fig. 1 und 2) proportional sind. Die Verstärkung $\Delta y/\Delta x$ ergibt sich hierbei aus dem Querschnittsverhältnis von Membran V zur Kapillare K, wobei die Längenänderungen $\Delta y$ der Flüssigkeitssäulen durchaus einige Zentimeter erreichen können. Um aus diesen Längenänderungen $\Delta y$ der Flüssigkeitssäulen bzw. Quecksilbersäulen elektrische Größen ableiten zu können, kreuzen die Quecksilbersäulen mäanderförmige Widerstände W, die dadurch mehr oder weniger kurzgeschlossen werden. Es verbleiben dann jeweils dem Drehmoment Dm proportionale Restwiderstände, die einerseits über die Quecksilbersäulen mit der Masse Ma und andererseits jeweils mit der inneren Elektrode E1 eines Zylinderkondensators Zk verbunden sind. Die beiden in Figur 3 schematisch aufgezeigten Zylinderkondensatoren Zk dienen als Koppelkondensatoren für die berührungslose kapazitive Übertragung der dem Drehmoment Dm (vergleiche Fig. 1 und 2) proportionalen Widerstandsänderungen. Die inneren Elektroden E1 sind dabei mit der Welle We (vergleiche Fig. 1 und 2) mechanisch verbunden, während die äußeren Elektroden E2 in bezug auf die Welle We ortsfest angeordnet sind.

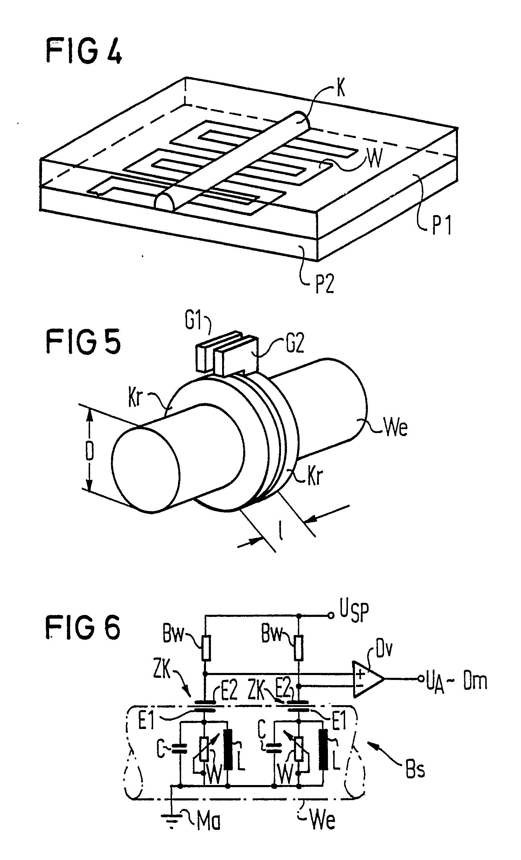

Figur 4 zeigt, daß die Kapillare K als U-förmige Rille auf der Innenseite einer Platte P1 gebildet ist und daß der mäanderförmige Widerstand W auf der Innenseite einer zweiten Platte P2 gebildet ist, wobei die beiden aus Glas bestehenden Platten P1 und P2 mit ihren Innenseiten durch Druck, Klebung und dgl. flüssigkeitsdicht verbunden sind. Der Querschnitt der Kapillaren K bzw. der Rille beträgt beispielsweise 0,3 x 0,3 mm. Die Kapillare K darf nicht wesentlich enger gewählt werden, da sonst ein Abreißen der Quecksilbersäulen aufgrund der Kapillarwirkung eintreten kann. Der auf der Platte P2 als mäanderförmige Dünnfilmschicht gebildete Widerstand W besteht beispeilsweise aus Nickel. Bei einer Schichtdicke von 0,1 $\mu m$, einer Bahnbreite von 80 $\mu m$ und ca. 150 Mäandern auf einer Länge von 20 mm ergibt sich ein Gesamtwiderstand von 50 k$\Omega$.

Figur 5 zeigt in stark vereinfachter perspektivischer Dar stellung die geometrisch/konstruktive Anordnung des gesamten Meßaufnehmers auf der Welle We. Es sind die beiden nebeneinander auf der Welle We befestigten Klemmringe Kr zu erkennen. Auf dem in Figur 5 rechts angeordneten Klemmring Kr sind zwei rechteckförmige Gehäuse G1 und G2 befestigt, welche die in Figur 3 aufgezeigten Teile beinhalten. Die Befestigung des Übertragungsgliedes Ug auf dem linken Klemmring Kr und seine Anordnung zwischen den beiden Gehäusen G1 und G2 ist in Figur 5 nicht zu erkennen. Es ist aber noch darauf hinzuweisen, daß die Kapillaren K in den Gehäusen G1 und G2 in axialer Richtung ausgerichtet sind und nicht in Umfangsrichtung, wie es aus der vereinfachten gestreckten Darstellung gemäß Figur 3 hervorgeht. In Figur 5 ist ferner die äußerst kompakte und raumsparende Ausbildung des gesamten Meßaufnehmers zu erkennen. Der axiale Meßabstand I ist hierbei geringer als der halbe Durchmesser D der Welle We.

Figur 6 zeigt eine insgesamt mit Bs bezeichnete Brückenschaltung für die kapazitive Übertragung der dem jeweiligen Drehmoment Dm (vergleiche Fig. 1 und 2) der strichpunktiert dargestellten Welle We proportionalen Widerstände W. Wie bereits anhand der Figur 3 aufgezeigt wurde, liegen die veränderlichen Widerstände W an einer Seite an Masse Ma an, während die andere Seite jeweils mit der inneren Elektrode E1 des zugeordneten Zylinderkondensators Zk verbunden ist. Die Masse Ma kann dabei berührungslos an die Welle We angelegt werden, da hierzu beispielsweise die kapazitive Kopplung zwischen Rotor und Stator einer entsprechenden Maschine völlig ausreicht.

Jeweils parallel zum Widerstand W ist in der dargestellten Schaltungsanordnung ein Kondensator C und eine Spule L geschaltet. Bei dem Kondensator C handelt es sich dabei um die Streukapazität des jeweiligen Zylinderkondensators Zk zur Welle We, während die tatsächlich vorhandenen Spulen L diese Streukapazitäten in Resonanz kompensieren.

Die ortsfest zur Welle We angeordneten äußeren Elektroden E2 der Zylinderkondensatoren Zk sind einerseits über zugeordnete Brückenschaltungsergänzungswiderstände Bw an eine Versorgungsspannung $U_{Sp}$ mit einer Frequenz von ca. 1 MHz angelegt und andererseits direkt mit dem Eingang eines Differenzverstärkers Dv verbunden. Dieser Differenzverstärker Dv bildet dann aus den Diagonalspannungen der Brückenschaltung Bs eine Ausgangsspannung $U_A$, die dem von der Welle We übertragenen Drehmoment Dm proportional ist. Mit der beschriebenen Anordnung kann sowohl im ruhenden als auch im rotierenden Zustand das über die Welle We übertragene Drehmoment Dm und damit auch die mechanische Leistung mit einer Genauigkeit von ± 0,5 % in einem Temperaturbereich von -35 C bis +60 C berührungslos gemessen werden.

Die insbesondere aus Figur 3 hervorgehende Umsetzung von kleinsten Verschiebungen in proportionale Widerstandsänderungen durch das hydraulisch/elektrische Prinzip kann auch allgemein bei der Messung mechanischer Dehnungen bzw. Spannungen eingesetzt werden und hier in manchen Fällen die konventionellen Dehnungsmeßstreifen ersetzen. Ein Anwendungsbeispiel hierzu ist der Überlastschutz in rauher Umgebung. Je nach den Anforderungen kann dabei auch die für die Drehmomentenmessung aufgezeigte berührungslose Übertragung entfallen.

## Ansprüche

1. Meßaufnehmer für Längen-oder Abstandsänderungen insbesondere für berührungslose Messung von Drehmomenten an rotierenden Wellen, bei welchem die zu erfassende Längen-oder Abstandsänderung verstärkt und in eine elektrische Größe umgewandelt wird, **gekennzeichnet durch** folgende Merkmale:
- die zu erfassende Längen-oder Abstandsänderung (Δ x) ist auf einen Verdränger (V) übertragbar,
- vom Verdränger (V) verdrängte Flüssigkeit (F) ist in eine Kapillare (K) einleitbar,
- die elektrische Größe ist aus Längenänderungen (Δ y) der Flüssigkeitssäule in der Kapillare (K) ableitbar.

2. Meßaufnehmer nach Anspruch 1, **dadurch gekennzeichnet,** daß der Verdränger (V) durch eine Membrane gebildet ist.

3. Meßaufnehmer nach Anspruch 1 oder 2, **dadurch gekennzeichnet,** daß die zu erfassende Längen-oder Abstandsänderung (Δ x) durch ein quer dazu ausgerichtetes Übertragungsglied (Ug) auf den Verdränger (V) übertragbar ist.

4. Meßaufnehmer nach einem der vorhergehenden Ansprüche, **gekennzeichnet durch** eine elektrisch leitende Flüssigkeit (F).

5. Meßaufnehmer nach Anspruch 4, **gekennzeichnet durch** Quecksilber als elektrisch leitende Flüssigkeit.

6. Meßaufnehmer nach Anspruch 4 oder 5, **dadurch gekennzeichnet,** daß Längenänderungen (Δ y) der Flüssigkeitssäule in der Kapillare (K) in Änderungen eines ohm'schen Widerstandes (W) umsetzbar sind.

7. Meßaufnehmer nach Anspruch 6, **dadurch gekennzeichnet,** daß der Widerstand (W) in Abhängigkeit von Längenänderungen (Δ y) der Flüssigkeitssäule in der Kapillare (K) durch die Flüssigkeitssäule bereichsweise kurzschließbar ist.

8. Meßaufnehmer nach Anspruch 7, **dadurch gekennzeichnet,** daß die Kapillare (K) zumindest bereichsweise durch eine zwischen zwei aneinanderliegenden Platten (P1, P2) verlaufende Rille gebildet ist und daß der Widerstand (W) als metallische Dünnfilmschicht auf eine der Platten (P1, P2) aufgebracht ist.

9. Meßaufnehmer nach Anspruch 8, **dadurch gekennzeichnet,** daß die Rille auf die Innenseite einer Platte (P1) eingebracht ist und daß der Widerstand (W) auf die Innenseite der anderen Platte (P2) aufgebracht ist.

10. Meßaufnehmer nach Anspruch 8 oder 9,
**dadurch gekennzeichnet,**
daß der Widerstand (W) zumindest bereichsweise einen die Kapillare (K) kreuzenden mäanderförmigen Verlauf aufweist.

11. Meßaufnehmer nach einem der vorhergehenden Ansprüche,
**dadurch gekennzeichnet,**
daß die zu erfassende Längen-oder Abstandsänderung ( $\Delta$ x) auf zwei gegenläufig arbeitende Verdränger (V) übertragbar ist,
denen jeweils eine Kapillare (K) zugeordnet ist.

12. Meßaufnehmer nach Anspruch 11,
**dadurch gekennzeichnet,**
daß die aus Längenänderungen ( $\Delta$ y) der Flüssigkeitssäulen in den Kapillaren (K) ableitbaren elektrischen Größen mit einer Brückenschaltung (Bs) in elektrische Spannungsänderungen ($U_M$) umsetzbar sind.

13. Meßaufnehmer nach einem der vorhergehenden Ansprüche für berührungslose Messung von Drehmomenten an rotierenden Wellen,
**dadurch gekennzeichnet,**
daß als zu erfassende Längen-oder Abstandsänderung ( $\Delta$ x) die in einem vorgebbaren axialen Meßabstand (1) der Welle (We) auftretende Torsion auf den Verdränger (V) übertragbar ist.

14. Meßaufnehmer nach Anspruch 13,
**dadurch gekennzeichnet,**
daß der axiales Meßabstand (1) höchstens dem halben Durchmesser (D) der Welle (We) entspricht.

15. Meßaufnehmer nach Anspruch 13 oder 14,
**dadurch gekennzeichnet,**
daß zur Abnahme der Torsion zwei in Umfangsrichtung linienförmig auf der Welle (We) aufliegende Klemmringe (Kr) vorgesehen sind.

16. Meßaufnehmer nach den Ansprüche 3 und 15,
**dadurch gekennzeichnet,**
daß das Übertragungsglied (Ug) in axialer Richtung auf dem einen Klemmring (Kr) befestigt ist und daß der zugeordnete Verdränger (V) mit Kapillare (K) auf dem anderen Klemmring (Kr) fest angeordnet ist.

17. Meßaufnehmer nach Anspruch 16,
**dadurch gekennzeichnet,**
daß die Kapillare (K) in axialer Richtung der Welle (We) ausgerichtet ist.

18. Meßaufnehmer nach einem der Ansprüche 13 bis 17,
**gekennzeichnet** durch eine kapazitive Übertragung der elektrischen Größe.

19. Meßaufnehmer nach Anspruch 18, dadurch **gekennzeichnet,** daß zur kapazitiven Übertragung mindestens ein koaxial zur Welle (We) angeordneter Zylinderkondensator (Zk) vorgesehen ist, dessen eine Elektrode (E1) mit der Welle (We) verbunden ist und dessen andere Elektrode (E2) in bezug auf die Welle (We) ortsfest angeordnet ist.

**FIG 1**

**FIG 2**

**FIG 3**

# FIG 4

# FIG 5

# FIG 6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | GB-A- 433 379 (J.H. GIBSON) * Das ganze Dokument * | 1-3,11, 13 | G 01 L 3/04 |
| A | | 15-17 | |
| | --- | | |
| Y | FR-A- 408 621 (W.H. KENERSON) * Das ganze Dokument * | 1-3,13 | |
| A | | 14 | |
| | --- | | |
| Y | US-A-2 297 644 (W. ANGST) * Das ganze Dokument * | 1,11 | |
| | --- | | |
| Y | CH-A- 379 156 (LANDIS & GYR AG) * Das ganze Dokument * | 1,2 | |
| A | | 4-7,12 | |
| | --- | | |
| Y | CH-A- 88 291 (J. EGLI-DEUCHER) * Das ganze Dokument * | 1,2 | |
| A | | 4-7,10, 12 | |
| | --- | | RECHERCHIERTE SACHGEBIETE (Int. Cl.4) |
| Y | FR-A- 433 361 (G. WAZAU) * Das ganze Dokument * | 1 | |
| | --- | | G 01 L 3 |
| A | US-A-3 208 284 (B.M. RIVERO) * Das ganze Dokument * | 8 | G 01 L 9 |
| | ----- | | G 01 L 1 |
| | | | G 01 L 7 |
| | | | G 01 G 5 |
| | | | G 01 F 23 |
| | | | G 01 F 1 |
| | | | G 01 F 11 |

Der vorliegende Recherchenbericht wurde für alle Patentansprüche erstellt

| Recherchenort | Abschlußdatum der Recherche | Prüfer |
|---|---|---|
| DEN HAAG | 10-10-1988 | VAN ASSCHE P.O. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
..................................................................
& : Mitglied der gleichen Patentfamilie, übereinstimmendes
    Dokument

EPO FORM 1503 03.82 (P0403)